Europäisches Patentamt

(19) European Patent Office  (11) Numéro de publication: **0 176 390**

Office européen des brevets  **B1**

(12) **FASCICULE DE BREVET EUROPÉEN**

(45) Date de publication du fascicule du brevet:  (51) Int. Cl.⁴: **B 60 G 11/30,** B 60 G 15/12,
27.04.88  B 60 G 17/04

(21) Numéro de dépôt: **85401649.0**

(22) Date de dépôt: **14.08.85**

(54) Suspension à flexibilité et amortissement variables.

(30) Priorité: **06.09.84 FR 8414078**

(43) Date de publication de la demande:
**02.04.86 Bulletin 86/14**

(45) Mention de la délivrance du brevet:
**27.04.88 Bulletin 88/17**

(84) Etats contractants désignés:
**DE GB IT**

(56) Documents cité:
**FR-A-1 483 928
FR-A-2 177 946
FR-A-2 436 030
GB-A-1 004 481**

(73) Titulaire: **AUTOMOBILES PEUGEOT, 75, avenue de
la Grande Armée, F-75116 Paris (FR)**
Titulaire: **AUTOMOBILES CITROEN, 62 Boulevard
Victor- Hugo, F-92200 Neuilly- sur- Seine (FR)**

(72) Inventeur: **Richard, Denis, 65, rue Mirabeau,
F-94600 Choisy Le Roi (FR)**

(74) Mandataire: **Boivin, Claude, 9, rue Edouard-
Charton, F-78000 Versailles (FR)**

## Description

La présente invention concerne une suspension oléopneumatique de véhicule automobile du genre de celles qui comprennent des vérins hydrauliques interposés entre la structure du véhicule et les bras support de roues, ces vérins étant reliés hydrauliquement par l'intermédiaire d'amortisseurs à des accumulateurs oléopneumatiques.

On a déjà proposé des suspensions oléopneumatiques de ce genre comprenant, pour chaque roue, un vérin muni d'accumulateurs et de moyens d'amortissement, ainsi que, pour chaque essieu, un accumulateur oléopneumatique supplémentaires et des moyens pour connecter ou déconnecter ces accumulateurs supplémentaire au circuit hydraulique afin d'introduiré ou d'éliminer une elasticité supplémentaire (FR-A-2177946).

La présente invention a pour objet une suspension du type ci-dessus caractérisée par le fait que l'accumulateur oléopneumatique supplémentaire de chaque essieu coopère avec un premier amortisseur supplémentaire relié au vérin de l'une des roues de l'essieu et avec un deuxième amortisseur supplémentaire relié au vérin de l'autre roue de l'essieu, en ce que les deux verins sont reliés entre eux par l'intermédiaire des amortisseurs supplémentaires et en ce que aussi les amortisseurs supplémentaires sont mis en circuit ou hors circuit par lesdits moyens.

Chaque essieu peut être équipé d'un régulateur de suspension à tiroir propre à mettre en circuit ou hors circuit l'accumulateur et les deux amortisseurs supplémentaires de l'essieu, sous l'effet d'une pression hydraulique agissant simultanément ou séparément sur les régulateurs des deux essieux du véhicule.

Chaque essieu peut être équipé d'un correcteur d'assiette propre à relier, selon la charge du véhicule, les vérins de suspension, à la haute pression ou à l'échappement, le régulateur de suspension étant équipé de moyens pour que le correcteur d'assiette puisse agir sur les deux vérins de l'essieu quand l'accumulateur et les deux amortisseurs supplémentaires sont en circuit ou hors circuit.

La pression agissant simultanément, ou séparément selon une variante de l'invention, sur les deux régulateurs de suspension peut être contrôlée par deux électrovannes disposées en série, admettant chacune deux états stables et coopérant avec un régulateur centrifuge, de telle sorte que les accumulateurs et les amortisseurs supplémentaires soient connectés ou déconnectés selon la vitesse du véhicule et les états d'excitation des électro-vannes commandées manuellement.

En variante, la pression agissant sur les régulateurs de suspension peut être contrôlée par une électro-vanne commandée à partir d'un boîtier électronique selon l'état de divers paramètres de conduite tels que le freinage, l'accélération ou la rotation du volant de direction, avec une possibilité d'intervention manuelle pour affermir la suspension.

On a décrit ci-après, à titre d'exemples non limitatifs, divers modes de réalisation de la suspension selon l'invention, avec référence aux dessins annexés dans lesquels:

La Figure 1 est le schéma d'un premier mode de réalisation de la suspension;

Les Figures 2 et 3 représentent des détails de variantes;

Les Figures 4 et 5 représentent en coupe le régulateur de suspension respectivement selon IV-IV de la Figure 5 et V-V de la Figure 4;

La Figure 6 est une vue à plus grande échelle du tiroir du régulateur de suspension.

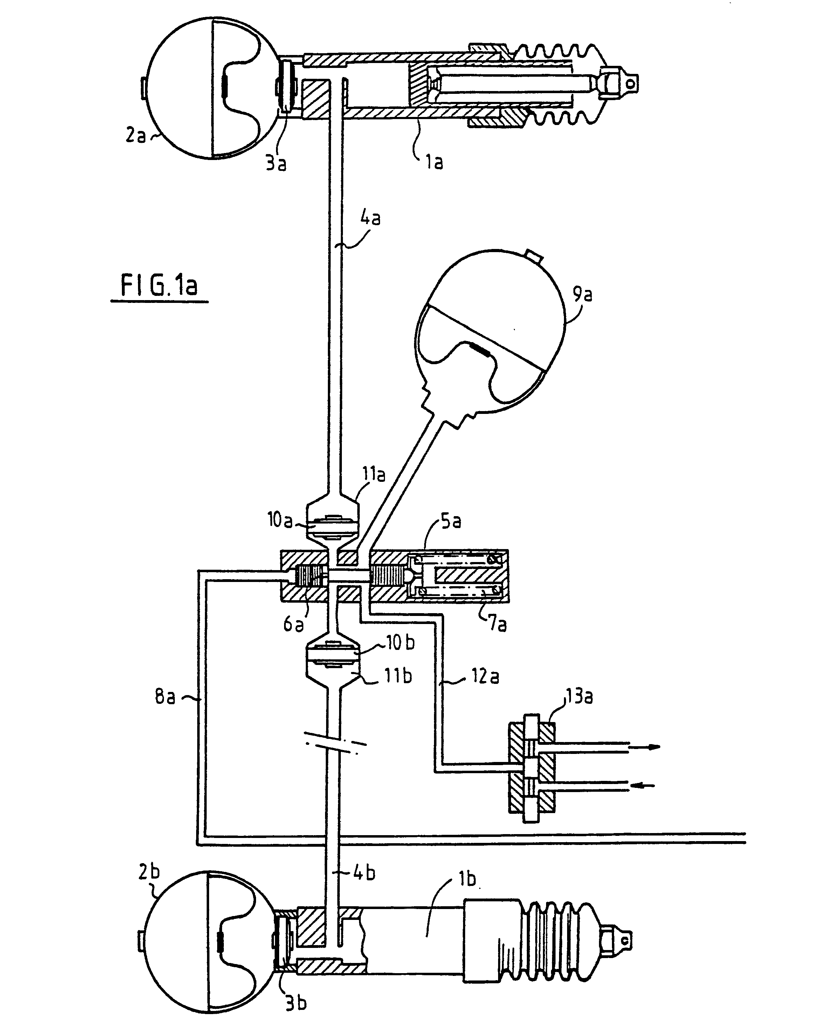

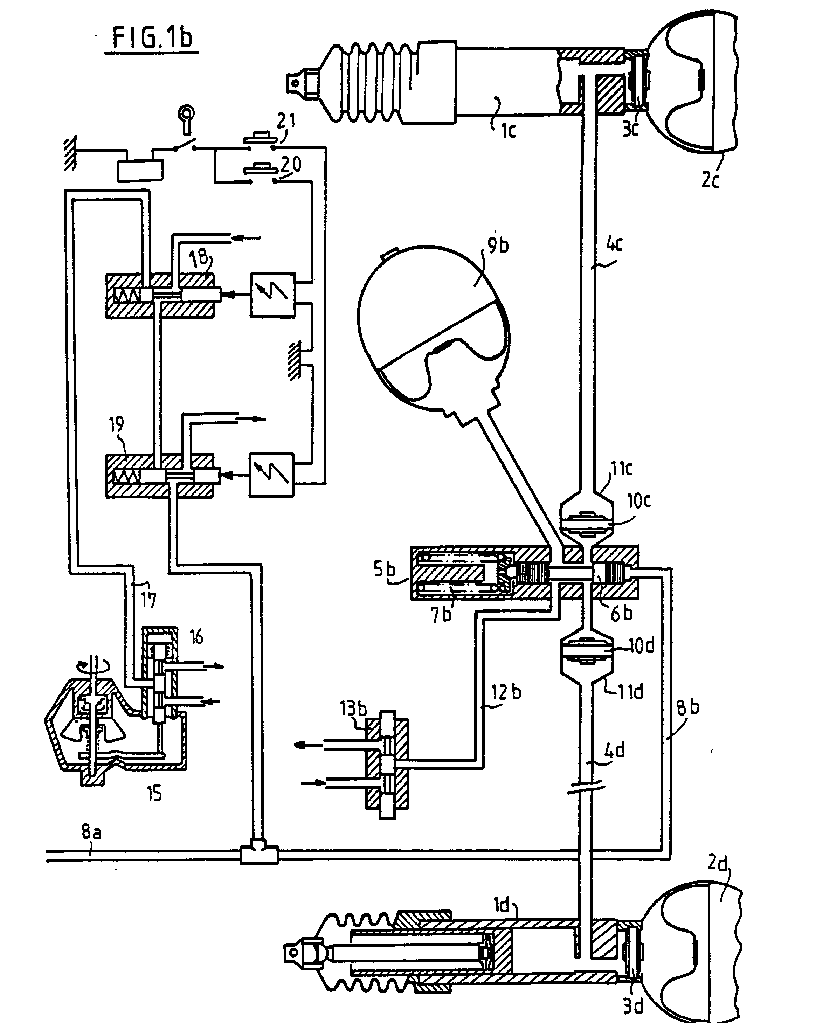

On voit à la Figure 1, un vérin de suspension 1a affecté à la roue droite de l'essieu avant, un vérin de suspension 1b affecté à la roue gauche de cet essieu avant, un vérin de suspension 1c affecté à la roue droite de l'essieu arrière, et un vérin de suspension 1d affecté à la roue gauche de cet essieu arrière. Chaque vérin coopère avec un accumulateur oléopneumatique 2a, 2b, 2c ou 2d, et un amortisseur 3a, 3b, 3c ou 3d disposé dans le circuit d'huile, entre l'accumulateur oléopneumatique et la chambre sous pression du vérin. Un conduit 4a, 4b, Ac ou 4d relie la chambre sous pression du vérin à l'un des deux dispositifs de flexibilité et d'amortissement supplémentaires de l'essieu, affectés l'un à l'essieu avant et l'autre à l'essieu arrière.

Chaque dispositif de flexibilité et d'amortissement supplémentaires comporte un régulateur 5a ou 5b composé principalement d'un tiroir 6a ou 6b pouvant se déplacer à l'encontre d'un ressort 7a ou 7b, sous l'effet d'une pression hydraulique arrivant par un conduit 8a ou 8b et propre à isoler les conduits 4a, 4b, 4c ou 4d quand cette pression a une valeur élevée ou à les relier à des accumulateurs oléopneumatiques 9a ou 9b quand cette pression est faible.

Des amortisseurs 10a, 10b, 10c et 10d sont logés dans des chambres 11a, 11b, 11c et 11d interposées entre les régulateurs de suspension 5a et 5b, et les conduits 4a, 4b, 4c et 4d de telle sorte que, lorsque la pression tombe dans les conduits 8a et 8b et que, de ce fait, les tiroirs 6a et 6b sont repoussés par les ressorts 7a et 7b, un amortissement et une flexibilité supplémentaires sont introduits dans les circuits de chaque vérin de suspension, les deux circuits de chaque essieu étant reliés entre eux par un accumulateur oléopneumatique unique par l'intermédiaire de deux amortisseurs indépendants. Le dispositif de flexibilité et d'amortissement supplémentaires comporte ainsi un amortissement supplémentaire par roue et un accumulateur supplémentaire par essieu.

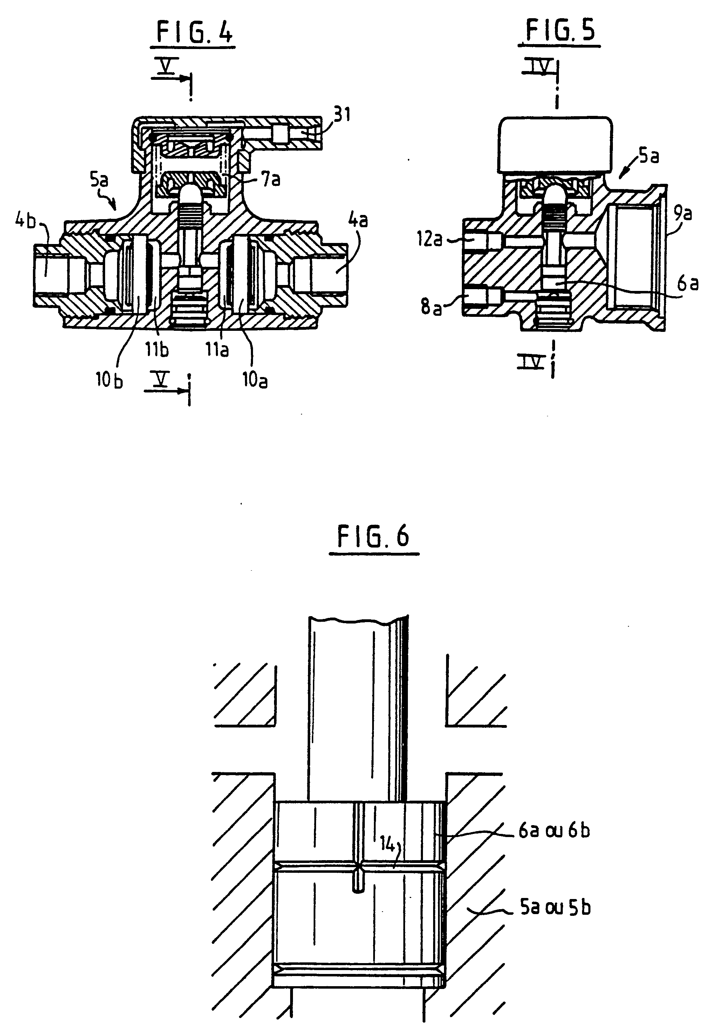

Un conduit 12a ou 12b relie chaque régulateur de suspension 5a ou 5b à un correcteur de hauteur 13a ou 13b qui dirige vers les vérins de suspension du liquide sous pression, selon la charge de l'essieu. Quand la pression dans les conduits 8a et 8b repousse les tiroirs 6a et 6b et que la flexibilité et l'amortissement supplémentaires sont éliminés, il est nécessaire que la correction de hauteur puisse intervenir. A cet effet, le tiroir 6a ou 6b comporte une rainure 12 en T qui relie, quand le tiroir est fermé, le correcteur de hauteur et les vérins de suspension (Figure 6). Cette rainure a une largeur et une profondeur de l'ordre de quelques dizièmes de millimètre, elle ne modifie donc pas les caractéristiques de flexibilité et d'amortissement de l'essieu quand le tiroir 6a ou 6b est fermé.

Un régulateur centrifuge 15 agit selon la vitesse du véhicule sur un régulateur de pression 16 relié à l'échappement et à la haute pression et maintient une pression régulée dépendant de la vitesse dans un conduit 17. Ce conduit 17 passe par une première électro-vanne 18 puis par une deuxième électro-vanne 19 et rejoint les conduits 8a et 8b qui commandent les régulateurs de suspension 5a et 5b.

L'électro-vanne 18 est une électro-vanne de sélection de pression, elle choisit entre la pression définie par le régulateur centrifuge 15 et la haute pression. L' électro-vanne 19 est une électro-vanne de marche-arrêt; quand elle est au repos, les conduits 8a et 8b sont à l'échappement, de sorte que le dispositif de flexibilité et d'amortissement supplémentaires sont mis en service; en revanche, quand elle est excitée, la suspension s'affermit sous l'effet, soit de la haute pression, soit de la pression régulée par le régulateur centrifuge, selon l'état de l'électro-vanne 18.

Deux boutons-poussoirs 20 et 21 ramenés au tableau de bord permettent la commande manuelle des électro-vannes 18 et 19. Quand le bouton 21 n'est pas enfoncé, la suspension est moelleuse; quand le bouton-poussoir 21 est enfoncé et que le bouton 20 ne l'est pas, elle est ferme; quand les deux boutons sont enfoncés, le fonctionnement est automatique, la suspension durcissant quand la vitesse du véhicule augmente.

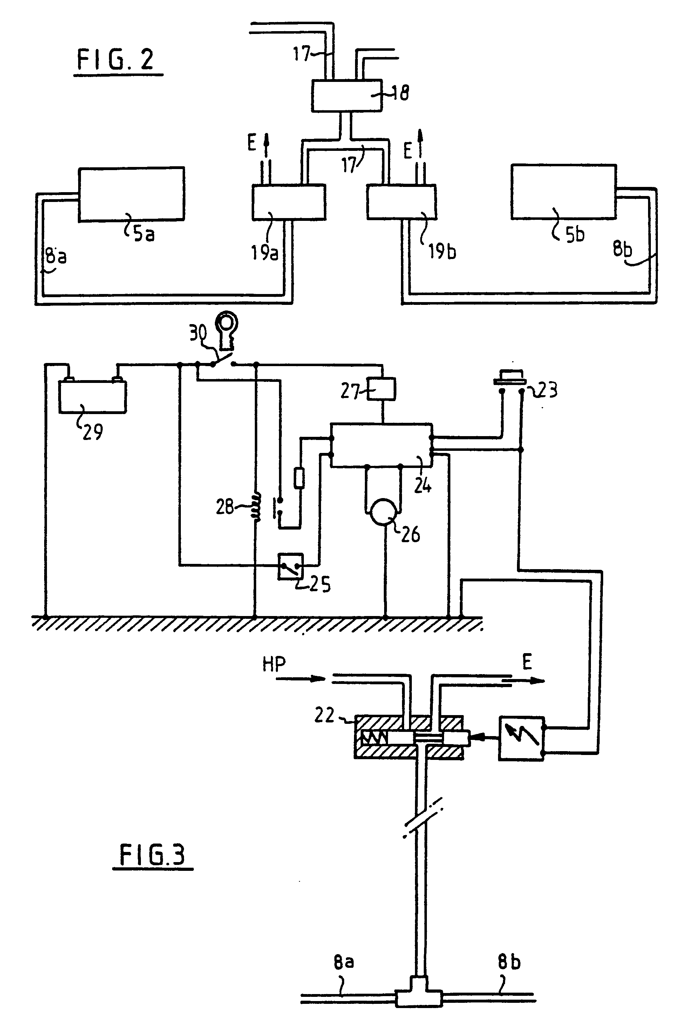

Dans la variante de la Figure 2, l'électro-vanne 19 est remplacée par deux électro-vannes 19a et 19b commandées par deux boutons-poussoirs indépendants; cette disposition permet de rendre indépendantes les suspensions avant et arrière.

Dans la variante de la Figure 3, les électro-vannes 18 et 19 sont remplacées par une électro-vanne unique 22 commandée soit par un bouton-poussoir 23 qui permet de sélectionner entre une suspension ferme quand le bouton-poussoir est appuyé et une suspension dépendant des paramètres de conduite quand le bouton-poussoir est relâché, soit par un boîtier électronique 24.

Le boîtier électronique 24 délivre une impulsion qui excite l'électro-vanne 22, soit quand un capteur de pression de frein 25 ou de rotation de volant de direction 26 dépasse un seuil, soit si le capteur d'accélération 27 détecte un signal. Le relais 28 alimente le boîtier 24 à partir de la batterie 29 dès que le contact 30 est mis. Quand le bouton-poussoir 23 est relâché, la suspension est normalement moelleuse; elle devient ferme quand le freinage ou l'accélération atteint une valeur donnée ou bien quand l'amplitude de la rotation du volant dépasse une valeur déterminée.

Les Figures 4 et 5 représentent des vues détaillées du régulateur de suspension 5a. L'accumulateur supplémentaire 9a et les amortisseurs supplémentaires 10a et 10b de l'essieu sont rassemblés en une pièce unique.

On voit les raccordements à l'accumulateur 9a, aux conduits 4a et 4b, aux conduits 12a du correcteur d'assiette et au conduit 8a. Un raccord 31 sert à la récupération des fuites ou suintement du tiroir. Le régulateur de suspension 5b a une constitution identique.

## Revendications

1. Suspension oléopneumatique de véhicule automobile comprenant, pour chaque roue, un vérin (1a ou 1b) muni d'accumulateurs et de moyens d'amortissement, ainsi que, pour chaque essieu, un accumulateur oléopneumatique supplémentaire (9a ou 9b) et des moyens (5a ou 5b) pour connecter ou déconnecter ces accumulateurs supplémentaires au circuit hydraulique,

caractérisé en ce que l'accumulateur oléopneumatique supplémentaire de chaque essieu coopère avec un premier amortisseur supplémentaire (10a) relié au vérin de l'une des roues de l'essieu et avec un deuxième amortisseur supplémentaire (10b) relié au vérin de l'autre roue de l'essieu,

en ce que les deux vérins sont reliés entre eux par l'intermédiaire des amortisseurs supplémentaires

et en ce que aussi les amortisseurs supplémentaires sont mis en circuit ou hors circuit par lesdits moyens (5a ou 5b).

2. Suspension selon la revendication 1, caractérisée par le fait que chaque essieu est équipé d'un régulateur de suspension à tiroir 5a ou 5b propre à mettre en circuit ou hors circuit l'accumulateur et les deux amortisseurs supplémentaires de l'essieu sous l'effet d'une même pression hydraulique agissant simultanément à l'encontre de moyens élastiques, sur les deux régulateurs de l'essieu avant et de l'essieu arrière.

3. Suspension selon la revendication 1, caractérisée par le fait que chaque essieu est équipé d'un régulateur de suspension à tiroir, propre à mettre en circuit ou hors circuit l'accumulateur et les deux amortisseurs supplémentaires de l'essieu sous l'effet d'une pression hydraulique agissant à l'encontre de moyens élastiques sur le régulateur de l'essieu avant et d'une pression hydraulique agissant à l'encontre de moyens élastiques sur le régulateur de l'essieu arrière.

4. Suspension suivant la revendication 2 ou 3, caractérisée en ce que chaque essieu est équipé d'un correcteur d'assiette (13a ou 13b) propre à relier, selon la charge du véhicule, les vérins de suspension à la haute pression ou à l'échappement, et en ce que le régulateur de suspension est équipé de moyens pour que le correcteur d'assiette agisse sur les deux vérins de chaque essieu quand l'accumulateur et les deux amortisseurs supplémentaires sont en circuit ou hors circuit.

5. Suspension selon la revendication 4, caractérisée en ce que le tiroir 6a ou 6b du régulateur de suspension 5a ou 5b est équipé d'une rainure 14 en T établissant une liaison hydraulique entre le correcteur d'assiette et les vérins de suspension quand le tiroir du régulateur de suspension est en position de fermeture, cette rainure en T étant suffisamment étroite pour ne pas influer sensiblement sur les caractéristiques de flexibilité et l'amortissement de la suspension.

6. Suspension selon l'une des revendications précédentes, caractérisée en ce que le circuit hydraulique qui commande le régulateur de suspension comporte deux électro-vannes disposées en série, admettant chacune deux états stables et coopérant avec un régulateur centrifuge de telle sorte que l'accumulateur et les amortisseurs supplémentaires soient connectés ou déconnectés selon la vitesse du véhicule et les états d'excitation des électro-vannes.

7. Suspension selon l'une des revendications 2 à 5, caractérisée en ce que le circuit hydraulique qui commande le régulateur de suspension comporte une électro-vanne commandée par des capteurs selon l'état de différents paramètres de conduite tels que le freinage, l'accélération ou la rotation du volant de direction, et en ce qu'elle comporte des moyens d'intervention manuelle pour affermir la suspension.

8. Suspension selon l'une des revendications précédentes,
caractérisée en ce que, pour chaque essieu, le régulateur de suspension, l'accumulateur supplémentaire et les deux amortisseurs supplémentaires sont rassemblés en une pièce unique.

## Patentansprüche

1. Ölpneumatische Kraftfahrzeugaufhängung, die für jedes Rad einen mit Speichern und Dämpfungsmitteln versehenen Zylinder (1a oder 1b) aufweist, sowie für jede Achse einen ölpneumatischen Zusatzspeicher (9a oder 9b) und Mittel (5a oder 5b), um diese Zusatzspeicher an den Hydraulikkreis anzuschließen oder von ihm abzutrennen, dadurch gekennzeichnet, daß der ölpneumatische Zusatzspeicher jeder Achse mit einem ersten Zusatzdämpfer (10a), der mit dem Zylinder des einen Rades der Achse verbunden ist, und mit einem zweiten Zusatzdämpfer (10b), der mit dem Zylinder des anderen Rades der Achse verbunden ist, zusammenwirkt, daß die beiden Zylinder unter Zwischenschaltung der Zusatzdämpfer miteinander verbunden sind und daß auch die Zusatzdämpfer durch besagte Mittel (5a oder 5b) an den Kreis angeschlossen oder von ihm abgetrennt werden.

2. Aufhängung nach Anspruch 1, dadurch gekennzeichnet, daß jede Achse mit einem einen Schieber enthaltenden Aufhängungsregler (5a oder 5b) versehen ist, der dazu geeignet ist, den Zusatzspeicher und die beiden Zusatzdämpfer der Achse unter der Einwirkung des gleichen hydraulischen Druckes, welcher gleichzeitig gegen elastische Mittel auf die beiden Regler der Vorderachse und der Hinterachse wirkt, an den Kreis anzuschließen oder von ihm abzutrennen.

3. Aufhängung nach Anspruch 1, dadurch gekennzeichnet, daß jede Achse mit einem einen Schieber enthaltenden Aufhängungsregler versehen ist, der dazu geeignet ist, den Zusatzspeicher und die beiden Zusatzdämpfer der Achse unter der Einwirkung eines hydraulischen Druckes, der gegen elastische Mittel auf den Regler der Vorderachse wirkt und eines hydraulischen Druckes, der gegen elastische Mittel auf den Regler der Hinterachse wirkt, an den Kreis anzuschließen oder von ihm abzutrennen.

4. Aufhängung nach Anspruch 2 oder 3, dadurch gekennzeichnet, daß jede Achse mit einem Ausgleichsventil (13a oder 13b) versehen ist, das dazu geeignet ist, entsprechend der Belastung des Fahrzeugs die Aufhängungszylinder mit dem Hochdruck oder dem Auslaß zu verbinden und daß der Aufhängungsregler mit Mitteln versehen ist, damit das Ausgleichsventil auf die beiden Zylinder jeder Achse einwirkt, wenn der Zusatzspeicher und die beiden Zusatzdämpfer an den Kreis angeschlossen oder von ihm abgetrennt sind.

5. Aufhängung nach Anspruch 4, dadurch gekennzeichnet, daß der Schieber (6a oder 6b) des Aufhängungsreglers (5a oder 5b) mit einer T-förmigen Rinne versehen ist, welche eine hydraulische Verbindung zwischen dem Ausgleichsventil und den Aufhängungszylindern herstellt, wenn der Schieber des Aufhängungsreglers sich in der Schließstellung befindet, wobei diese T-förmige Rinne genügend eng ausgebildet ist, um die elastischen und dämpfenden Eigenschaften der Aufhängung nicht wesentlich zu beeinflußen.

6. Aufhängung nach einem der vorhergehenden Ansprüche, dadurch gekennzeichnet, daß der den Aufhängungsregler steuernde Hydraulikkreis zwei in Serie zueinander angeordnete Magnetventile aufweist, von denen jedes zwei stabile Zustände annehmen kann und die mit einem Zentrifugalregler derart zusammenwirken, daß der Zusatzspeicher und die Zusatzdämpfer in Abhängigkeit von der Fahrzeuggeschwindigkeit und dem Erregungszustand der Magnetventile angeschlossen oder abgetrennt werden.

7. Aufhängung nach einem der Ansprüche 2 bis 5, dadurch gekennzeichnet, daß der den Aufhängungsregler steuernde Hydraulikkreis ein Magnetventil aufweist, das von Gebern in Abhängigkeit vom Zustand verschiedener Führungsparameter, wie die Bremsung, die Beschleunigung oder die Drehung des Lenkrades angesteuert wird und daß sie Mittel zum manuellen Eingreifen aufweist, um die Aufhängung härter zu machen.

8. Aufhängung nach einem der vorhergehenden Ansprüche, dadurch gekennzeichnet, daß der Aufhängungsregler, der Zusatzspeicher und die beiden Zusatzdämpfer für jede Achse in einem einzigen Bauteil zusammengefaßt sind.

**Claims**

1. Motor vehicle oleopneumatic suspension including, for each wheel, a jack (1a or 1b) with accumulators and shock absorbing means as well as, for each axle, an additional oleopneumatic accumulator (9a or 9b) and means (5a or 5b) for connecting these additional accumulators to or disconnecting them from the hydraulic circuit, characterized by the fact that the additional oleopneumatic accumulator for each axle cooperates with a first additional shock absorber (10a) connected to the jack of one of the wheels of the axle and with a second additional shock absorber (10b) connected to the jack of the other wheel of the axle, in that the two jacks are connected together through the additional shock absorbers and in that the additional shock absorbers are also switched in or out of circuit by said means (5a or 5b).

2. Suspension according to claim 1, characterized by the fact that each axle is equipped with a suspension regulator with slide valve (5a or 5b) adapted for placing the accumulator in or out of circuit and the two additional shock absorbers of the axle, under the effect of the same hydraulic pressure, acting simultaneously against resilient means on the two regulators of the front axle and of the rear axle.

3. Suspension according to claim 1, characterized by the fact that each axle is equipped with a suspension regulator with slide valve adapted for placing the accumulator in or out of circuit and the two additional shock absorbers of the axle, under the effect of a hydraulic pressure acting, against resilient means, on the regulator of the front axle and of a hydraulic pressure acting against resilient means on the regulator of the rear axle.

4. Suspension according to claim 2 or 3, characterized in that each axle is equipped with an attitude corrector (13a, or 13b) adapted for connecting the suspension jacks, depending on the load of the vehicle, either to the high pressure or to exhaust, and in that the suspension regulator is equipped with means so that the attitude corrector acts on both jacks of each axle when the accumulator and the two additional shock absorbers are in or out of circuit.

5. Suspension according to claim 4, characterized in that the slide valve (6a or 6b) of the suspension regulator 5a or 5b has a T shaped groove 14 establishing a hydraulic connection between the attitude corrector and the suspension jacks when the slide valve of the suspension regulator is in the closed position, this T shaped groove being sufficiently narrow so as not to appreciably influence the flexibility and shock absorbing characteristics of the suspension.

6. Suspension according to one of the preceding claims, characterized in that the hyraulic circuit which controls the suspension regulator includes two electrovalves disposed in series, each having two stable states and cooperating with a centrifugal regulator, so that the accumulators and the additional shock absorbers are connected or disconnected depending on the speed of the vehicle and the excitation states of the electrovalves.

7. Suspension according to one of claims 2 to 5, characterized in that the hydraulic circuit which controls the suspension regulator includes an electrovalve controlled by sensors depending on the state of different driving parameters such as braking, acceleration or rotation of the steering wheel, and in that it includes manual intervention for making the suspension firmer.

8. Suspension according to one of the preceding claims, characterized in that, for each axle, the suspension regulator, the additional accumulator and the two additional shock absorbers are grouped together in a single piece.

FIG.1a

0 176 390

# FIG.1b

3

0 176 390

FIG. 2

5a

8a

E          E

5b   8b

17

18

17

19a   19b

30

29

27   23

28   24

25   26

HP          E

22

FIG.3

8a          8b

5

# FIG. 4

# FIG. 5

# FIG. 6